Europäisches Patentamt

European Patent Office

Office européen des brevets

(19)

(11) **EP 0 847 021 A1**

## (12) DEMANDE DE BREVET EUROPEEN

(43) Date de publication:
**10.06.1998 Bulletin 1998/24**

(51) Int Cl.⁶: **G06F 17/40**
// G06F157:00

(21) Numéro de dépôt: **97402875.5**

(22) Date de dépôt: **27.11.1997**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **03.12.1996 FR 9614913**

(71) Demandeurs:
- **Riboud, Jacques**
  **75116 Paris (FR)**
  Etats contractants désignés:
  **DE GB**
- **Société de Services Interbancaires pour l'Ecu Externe Constant( S.I.E.E.C.)**
  **75017 Paris (FR)**
  Etats contractants désignés:
  **FR**

(72) Inventeur: **Riboud, Jacques**
**75116 Paris (FR)**

(74) Mandataire: **de Saint-Palais, Arnaud Marie et al**
**CABINET MOUTARD**
**35, Avenue Victor Hugo**
**78960 Voisins le Bretonneux (FR)**

(54) **Procédé de transfert entre plusieurs systèmes de quantités exprimées dans des unités de mesure différentes**

(57) Pour transférer une quantité mesurée dans une première unité utilisée par une première entité (B1) vers une seconde entité (B2) utilisant une seconde unité, ces unités étant associées à un paramètre respectif variant en fonction du temps, le système selon l'invention comprend: des moyens pour déterminer une première opération tenant compte des variations du paramètre associé à la première unité, pour convertir celle-ci en une unité de référence associée à un paramètre constant; des moyens pour appliquer la première opération à la quantité à transférer, et envoyer la quantité convertie vers le second système (B2) ; des moyens pour déterminer une seconde opération pour convertir l'unité de référence dans la seconde unité, tenant compte des variations du paramètre associé à celle-ci ; et des moyens pour appliquer la seconde opération à la quantité en unités de référence et transférer la quantité convertie dans le second système (B2).

Fig. 1

**Description**

La présente invention concerne un système pour l'échange entre plusieurs entités de grandeurs exprimées dans des unités de mesure différentes, mais convertibles entre elles, chacune de ces unités étant associées à un paramètre variant d'une manière aléatoire en fonction du temps.

Elle s'applique notamment, mais non exclusivement, à la gestion d'un réseau hydroélectrique comprenant un ensemble de bassins ou réservoirs, naturels ou artificiels, éventuellement interconnectés par des canalisations d'eau, ces bassins étant chacun couplés à des génératrices hydroélectriques et à des mécanismes de pompage permettant, non seulement d'abaisser leur niveau, mais également de l'augmenter pour stocker l'énergie pendant les périodes où l'électricité est disponible à bas prix.

Il s'avère que la puissance susceptible d'être produite par chaque bassin couplé à des génératrices hydroélectriques dépend de la quantité d'eau dans le bassin, de la hauteur d'eau au-dessus des génératrices hydroélectriques, et de l'état de ces dernières, ces paramètres dépendant de la géographie du bassin, ainsi que du niveau de remplissage de ce dernier qui varie dans le temps d'une manière aléatoire, notamment en fonction des conditions climatiques. Dans ces conditions, il s'avère difficile de connaître a tout instant la puissance disponible au niveau de chaque bassin. Ceci est d'autant plus vrai lorsque les génératrices couplées aux bassins ne sont pas continuellement en fonctionnement.

Il est par ailleurs malaisé de réguler le niveau d'eau de chaque bassin en fonction des besoins, ceux-ci pouvant également servir à alimenter des consommateurs d'eau.

Par analogie, la présente invention s'applique également aux échanges internationaux de biens et services qui sont généralement effectués avec une valeur de contrepartie exprimée dans une ou plusieurs monnaies, et dans certains cas, à l'aide d'une monnaie d'un Etat, choisie comme monnaie de référence. Or, il s'avère d'une part que les valeurs réelles, en terme de pouvoir d'achat, des monnaies de tous les Etats sans exception sont soumises à des variations plus ou moins rapides, et d'autre part, que les taux de change entre les monnaies subissent des fluctuations imprévisibles qui peuvent entraîner des pertes considérables lors de transactions internationales. Ces variations résultent d'un grand nombre de facteurs, et notamment de la santé économique de l'Etat émetteur de la monnaie, de la quantité de monnaie émise et des spéculations exercées sur la monnaie.

Il est en effet primordial que les prix en valeur réelle demandés et payés pour les biens et services échangés entre Etats soient fixes pendant une période de durée suffisante. Il n'en est pas ainsi du fait des taux de change des monnaies nationales qui montent ou baissent, agités d'une fébrilité chronique, et donc qui ne reflètent pas, la plupart du temps, les véritables positions relatives présentes, ou telles qu'on les estime pour le futur, des Etats d'où ces monnaies sont issues.

Par ailleurs, dans le système monétaire actuel, il n'est pas possible de stabiliser les taux de change entre les monnaies. En effet, lorsqu'une monnaie est artificiellement soumise par la spéculation à une baisse par rapport aux autres monnaies, le seul moyen de contrer cette spéculation en vue de stabiliser son taux de change par rapport aux autres monnaies nationales consiste à l'échanger contre une quantité correspondante en monnaie plus forte émise à cet effet. Cependant, cette opération à pour effet d'augmenter la masse monétaire en circulation de la monnaie plus forte, et donc d'augmenter l'inflation dans le marché de l'Etat émetteur de cette monnaie.

La présente invention a pour but de supprimer ces inconvénients. A cet effet, elle propose un système de transfert utilisable pour réguler les flux hydrauliques et électriques dans un réseau hydroélectrique et également pour réguler les flux monétaires dans les transactions internationales, ce système permettant de transférer des quantités mesurées dans des unités locales de mesure différentes entre une pluralité d'entités, chaque entité utilisant une unité locale de mesure propre, associée à au moins un paramètre variant en fonction du temps d'une manière aléatoire,

Selon l'invention, chaque entité est associée à un calculateur périphérique respectif connecté à un calculateur central par un réseau de transmission, chaque calculateur périphérique comprenant :

- des moyens pour déterminer une première opération de conversion pour convertir l'unité locale de mesure utilisée par l'entité associée, en une unité de référence prédéterminée, et une seconde opération de conversion pour convertir réciproquement l'unité de référence en l'unité locale de mesure utilisée par l'entité associée, l'unité de référence étant associée à un paramètre constant en valeur réelle, et ces opérations de conversion tenant compte des variations passées du paramètre associé à l'unité locale de mesure,

- un premier moyen de transfert pour transférer vers une autre entité des quantités mesurées dans l'unité locale utilisée par l'entité, ces moyens appliquant la première opération de conversion à la quantité à transférer pour obtenir la quantité équivalente en unités de référence, et transférant cette quantité avec l'indication de l'entité destinatrice de cette quantité, par le réseau de transmission, vers le calculateur central, et

- un second moyen de transfert pour transférer du calculateur central des quantités en unités de référence, ces moyens appliquant la seconde opération de conversion à ces quantités pour obtenir la quantité équivalente en unités locales utilisées par l'entité associée, et transférant par le réseau de transmission vers l'entité associée la quantité équivalente en unités locales,

le calculateur central comprenant des moyens pour recevoir et stocker les quantités en unités de référence transférées par les calculateurs périphériques des entités et pour transmettre vers les calculateurs périphériques des quantités en unités de référence.

Lorsque le système selon l'invention est appliqué à la gestion d'un réseau hydroélectrique, l'unité de référence correspond à l'énergie électrique et les unités locales à l'énergie hydroélectrique disponible en sortie de chaque bassin; les opérations de conversion consistent suivant le cas, en l'alimentation des génératrices ou en la mise en oeuvre des dispositifs de pompage ; et les entités correspondent aux bassins.

Dans ce contexte, le système selon l'invention permet de déterminer à tout instant la puissance disponible en sortie de chaque bassin, avec une consommation minimum d'énergie, du fait de la compensation des énergies produites entre les bassins. Il permet également de réguler le niveau de chaque bassin en fonction des besoins et des conditions climatiques, l'énergie utilisée pour remplir un bassin dont le niveau de remplissage est trop bas étant fournie par le vidage d'un autre bassin dont le niveau de remplissage est plus élevé.

Lorsque le système selon l'invention est appliqué aux transactions commerciales internationales, les unités locales correspondent aux monnaies nationales, tandis que l'unité de référence correspond à une monnaie de référence créée de manière à être stable en pouvoir d'achat dans l'un des Etats dont la monnaie nationale a été choisie comme base des conversions avec la monnaie de référence. Ainsi, les fonds convertis dans la monnaie de référence conservent leur valeur dès l'instant où est effectuée la première conversion dans l'unité ou monnaie de référence, et ce jusqu'à la seconde opération de conversion. On évite ainsi les divergences en valeur réelle engendrées par les conversions entre monnaies nationales, dont les variations en valeur réelle (pouvoir d'achat) et les variations en cours de change sont sans relation systémique.

Avantageusement, les quantités mesurées en unités de référence ne sont utilisées que pour le transfert de quantités entre les systèmes, tandis que les quantités en unités locales peuvent être échangées à l'intérieur des entités. Ainsi, lorsque le système selon l'invention est appliqué aux monnaies, l'unité ou monnaie de référence n'est pas utilisée pour les transactions locales à l'intérieur d'un Etat, mais uniquement pour les transactions internationales; elle n'est donc pas soumise aux causes qui entraînent la dépréciation des monnaies locales ou nationales, à savoir, la masse monétaire locale en circulation à l'intérieur de l'Etat, la production, la consommation, les salaires, ou encore les prix à l'importation.

Les taux de conversion respectifs des unités locales variant en fonction des quantités en unités locales mises en circulation respectivement par les différentes entités. Ainsi, lorsque le paramètre associé à une unité locale d'une entité perd anormalement sa valeur par rapport à ceux associés aux autres unités locales, le système selon l'invention peut comprendre en outre des moyens pour déclencher le premier moyen de transfert, avec comme destinataire la première entité, appliqué à une certaine quantité mesurée dans cette unité locale, ce qui a pour effet de retirer cette quantité en unités locales de la première entité, de lui appliquer la première opération de conversion, et de transférer en contrepartie la quantité équivalente en unités de référence, du calculateur central vers le calculateur périphérique de cette entité.

Inversement, lorsque le paramètre associé à l'unité locale d'une entité franchit un seuil haut par rapport aux paramètres associés aux autres unités locales, le système selon l'invention comprend des moyens pour déclencher le second moyen de transfert appliqué à une certaine quantité d'unités de référence vers cette entité, ce qui a pour effet d'appliquer la seconde opération de conversion à la quantité en unités de référence, et de transférer en contrepartie la quantité équivalente en unités locales de cette entité, du calculateur central vers le calculateur périphérique de cette entité.

Appliqué aux monnaies, la masse monétaire disponible de la monnaie de référence étant illimitée, elle peut être créée ou détruite en fonction des besoins, pour réguler de manière automatique les valeurs respectives des autres monnaies. Le système selon l'invention est ainsi capable de stabiliser les taux auxquels sont échangées les monnaies nationales, et permet de ce fait d'apaiser la panique et de repousser la spéculation.

Selon une autre particularité de l'invention, la seconde opération de conversion utilise un facteur de conversion croissant au cours du temps. Ainsi, les quantités en unités locales converties en unités de référence présentent une valeur au cours du temps variable mais comparable par l'intermédiaire de l'unité de référence.

Un mode de réalisation du système selon l'invention sera décrit ci-après, à titre d'exemple non limitatif, avec référence aux dessins annexés dans lesquels:

La figure 1 représente schématiquement les mécanismes mis en oeuvre par le système selon l'invention ;

La figure 2 représente schématiquement un réseau hydroélectrique dans lequel le système selon l'invention peut être mis en oeuvre ;

La figure 3 représente un système selon l'invention comprenant des calculateurs périphériques et un calculateur central, interconnectés en réseau ;

La figure 4 illustre sous la forme d'un schéma bloc les traitements effectués par chaque système périphérique représenté sur la figure 3 ;

La figure 5 illustre sous la forme d'un schéma bloc les traitements effectués par le système central représenté sur la figure 3 ;

La figure 6 illustre sous la forme d'un schéma bloc les traitements particulier effectués par un système périphérique de contrôle représenté sur la figure 3.

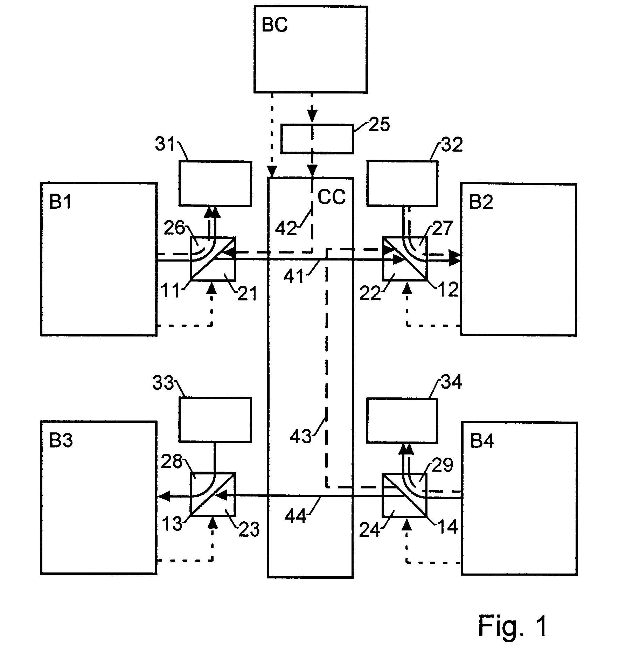

La figure 1 représente schématiquement une pluralité d'entités B1, B2, B3, B4 qui émettent des quantités mesurées en unités locales de mesure respectives, ces quantités étant utilisables à l'intérieur de chaque entité et étant convertibles dans les autres unités locales de mesure.
Les unités locales de mesure présentent la particularité d'être associées à des paramètres respectifs fluctuant en valeur d'une manière aléatoire en fonction du temps.

Les différentes entités B1 à B4 sont amenées à échanger des quantités mesurées dans leurs unités locales respectives. A cet effet, ils sont tous connectés à un même centre de commutation CC, par l'intermédiaire d'un mécanisme de conversion 11 à 14 respectif qu'ils contrôlent. Chaque mécanisme de conversion 11 à 14 comprend une zone de stockage temporaire ou mémoire tampon 21 à 24 couplée au mécanisme de conversion proprement dit 26 à 29.

Lorsque par exemple, l'entité B1 déclenche un transfert d'une quantité X1, mesurée dans l'unité locale UL1 de l'entité B1 vers l'entité B2, cette quantité est tout d'abord traitée par le mécanisme de conversion 11 qui la transfère dans une zone de stockage 31 de quantités émises par l'entité B1, et qui engendre une quantité équivalente Xr mesurée dans une unité de référence UR, constante en valeur qui est appliquée en entrée de la mémoire tampon 21 associée à un identificateur de l'entité destinatrice, dans cet exemple B2. Le centre de commutation CC qui reçoit l'ordre de transfert de la quantité Xr vers l'entité B2, retire immédiatement la quantité Xr de la mémoire tampon 21 pour la transférer (flèche 41) vers la mémoire tampon 22 connectée à l'entité B2. Cette quantité Xr peut ensuite être utilisée par l'entité B2 pour effectuer d'autres transferts avec les autres entités, ou bien être convertie en totalité ou partiellement dans l'unité locale UL2 de l'entité B2. Dans ce dernier cas, l'entité B2 déclenche le mécanisme de conversion 12 associe qui retire de la mémoire tampon 22 la quantité en unités de référence commandée, et transfère une quantité équivalente X2 mesurée dans l'unité locale UL2 de la zone de stockage 32 vers l'entité B2.

Il est à noter qu'au cours du processus de transfert des X1 unités locales UL1 vers l'entité B2, aucune perte ne s'est produite grâce à la stabilité en valeur de l'unité de référence UR même si la conversion en unités locales UL2 de la quantité transférée Xr n'est pas effectuée immédiatement après le transfert.

Le centre de commutation CC traite en temps réel tous les transferts en unités de référence UR entre toutes les entités B1 à B4, par exemple comme représenté sur la figure 1, entre B4 et B2 (flèche 43) et entre B4 et B3 (flèche 44). De cette manière, il compense immédiatement les mouvements entrée et de sortie en B1 à B4, et détermine ainsi un solde pour chaque entité exprimant la position de celui-ci par rapport à CC.

Le centre de commutation CC effectue les transferts entre les mémoires tampons 21 à 24 uniquement lorsque ces transferts n'entraînent pas un dépassement de seuils minimum et maximum associés à chaque mémoire tampon 21 à 24. Lorsqu'un transfert n'est pas effectué parce qu'il entraîne un dépassement de seuil, le centre de commutation CC avertit l'entité source du transfert qui doit prendre des mesures appropriées pour que ce transfert devienne réalisable.

Le centre de commutation CC est contrôlé par un système de contrôle BC qui surveille les seuils appliqués à chaque mémoire tampon 21 à 24. Ainsi, le système de contrôle BC peut contrôler la quantité d'unités de référence mise en circulation.

Le système de contrôle BC comprend par ailleurs un mécanisme de régulation automatisé qui surveille et régule en temps réel les taux de conversion entre les différentes unités locales UL, et lorsqu'un taux de conversion d'une unité locale est orienté d'une manière anormale à la baisse (par exemple si ce taux dépasse un certain seuil bas prédéterminé), ce mécanisme intervient en déclenchant le transfert (flèche 42) d'une certaine quantité Xr' d'unités de référence UR de la mémoire tampon 25 qui lui est associée vers la mémoire tampon associée à l'entité dont l'unité locale est en baisse (B1 dans l'exemple de la figure 1), ce qui a pour effet de transférer au niveau du mécanisme de conversion 11, une quantité équivalente mesurée en unités locales UL1, de l'entité B1 vers la zone de stockage 31, et donc de retirer cette quantité en circulation à l'intérieur de l'entité B1. Cette opération peut être répétée jusqu'à obtenir l'effet escompté sur le taux de conversion en question.

Inversement, lorsque le taux de conversion d'une unité locale UL1 dépasse un certain seuil haut prédéterminé, ce mécanisme déclenche le transfert de la mémoire tampon correspondante 21, d'une quantité Xr" d'unités de référence UR vers la mémoire tampon 25, ce qui a pour effet, au niveau du mécanisme de conversion 11 de transférer une quantité équivalente en unités locales UL1 de la zone de stockage 31 vers l'entité B1.

Selon une autre particularité selon l'invention, les quantités stockées dans les zones de stockage 31 à 34, ainsi que dans les mémoires tampons augmentent en valeur absolue en fonction du temps à des taux prédéterminés, pour constituer des réserves de régulation.

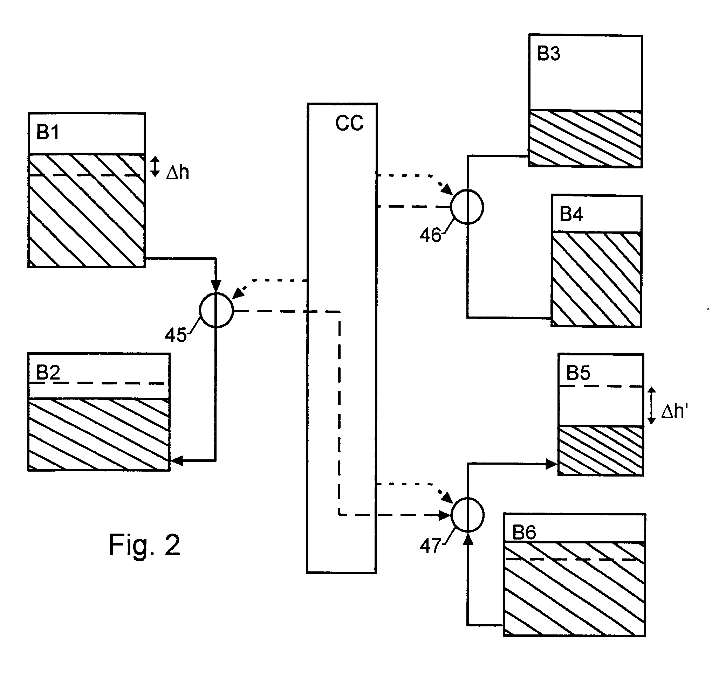

Le système selon l'invention s'applique par exemple à la gestion d'un réseau hydroélectrique. Ainsi, dans la figure 2, chaque entité correspond à un bassin B1 à B6, le centre de commutation CC à un centre de commutation électrique, et les unités locales UL au niveau d'eau dans chaque bassin, l'unité de référence correspondant à la puissance électrique. Les bassins sont interconnectés deux à deux par un système hydroélectrique 45, 46, 47 comprenant une génératrice hydroélectrique et un dispositif de pompage, commandés par le centre de commutation CC.

Ainsi, par exemple, si l'on considère que le niveau du bassin B1 est au dessus du niveau souhaité d'un écart $\Delta h$ et le niveau du bassin B5 en dessous du niveau souhaité, les bassins B1 et B5 n'étant pas interconnectés du point de vue hydraulique, le bassin B1 peut être vidé dans le bassin B2 de manière à faire baisser son niveau de $\Delta h$, ce qui entraîne la génératrice hydroélectrique du système 45. L'énergie électrique ainsi produite est ensuite appliquée par le centre de commutation CC au dispositif de pompage du système hydroélectrique 47 qui pompe dans le bassin B6 pour remplir le bassin B5 dont le niveau s'élève de $\Delta h'$.

De même, si l'on souhaite réguler la puissance disponible en sortie du bassin B1, il suffit selon le cas d'évacuer ou de fournir l'énergie correspondant respectivement à l'excès ou au manque d'eau dans le bassin.

Un autre exemple d'application du système selon l'invention concerne les mécanismes monétaires de transferts internationaux. Ainsi, dans la figure 1, chaque entité correspond à une banque, le centre de commutation CC à un centre interbancaire de compensation, et les unités locales UL aux monnaies nationales des Etats où sont situées les banques.

Lorsqu'un ordre de transfert est donné à la banque B1 d'un montant X1 dans la monnaie UL1, d'un compte Cli géré par cette banque vers un compte C2j géré par la banque B2, ce montant X1 est retiré du compte Cli et ajouté au compte 31 par l'intermédiaire du mécanisme de conversion 11 qui crée la quantité équivalente Xr en monnaie de référence UR (figure 1). Le mécanisme de conversion 11 transmet ensuite à destination du centre de compensation CC un ordre de transfert du montant Xr dans la monnaie de référence vers le compte 22 à destination du compte C2j géré par la banque B2.

Le titulaire du compte C2j est alors averti qu'il dispose de la somme Xr en monnaie de référence, qu'il peut soit utiliser dans l'Etat où est située la banque B2 après l'avoir convertie dans la monnaie nationale UL2, soit transférer vers un autre compte pour une nouvelle transaction internationale. Dans le premier cas, le mécanisme de conversion 12 représenté sur la figure 1 retire le montant Xr du compte 22, et transfère le montant correspondant X2 en monnaie locale UL2 du compte 32 vers le compte C2j géré par la banque B2.

La banque centrale BC a notamment pour rôle de réguler les taux de change entre les monnaies nationales des Etats, d'une part en absorbant les ventes excessives de monnaie faible, ce qu'elle peut faire en transférant les excédants dans les comptes correspondants 31 à 34, contre l'équivalent en monnaie de référence qu'elle crée, et d'autre part en remettant en circulation dans les Etats correspondants, les quantités manquantes à partir des comptes correspondants 31 à 34, par destruction des montants équivalents en monnaie de référence.

Le taux de conversion en monnaie de référence UR est par exemple déterminé à partir d'une monnaie locale choisie pour servir de monnaie locale de base de la monnaie de référence (par exemple la monnaie locale UL1 utilisée dans le pays d'origine de la banque B1), et d'un indice de variation courant Id1 de la valeur de la monnaie locale UL1, cet indice pouvant être choisi égal à l'indice d'inflation dans le pays où est utilisée la monnaie locale de base UL1.

Ainsi, pour connaître la valeur Xr en monnaie de référence du montant X1 en monnaie UL1 utilisée comme monnaie locale de base, il suffit d'appliquer la formule suivante :

$$Xr = X1 \times Id1. \qquad (1)$$

Si l'on souhaite convertir en monnaie de référence UR, une somme X3 en monnaie locale UL3 utilisée dans le pays d'origine de la banque B3, il suffit d'utiliser le taux de change T31 de la monnaie locale UL3 en monnaie locale UL1, en appliquant la formule suivante :

$$Xr = X3 \times T31 \times Id1 \qquad (2)$$

Comme les valeurs en monnaies locales varient en valeur d'une manière aléatoire en fonction du temps, cette variation n'est pas connue a priori, mais est évaluée de manière approximative à partir des indices d'inflation connus pour les périodes écoulées. Ainsi, par exemple, on calcule par extrapolation un indice d'inflation Id journalier à l'aide de la formule suivante :

$$Id = Id_m + j \times Id_j \qquad (3)$$

$Id_m$ étant le dernier indice d'inflation connu, j le nombre de jours écoulés depuis la fin de la période d'évaluation de l'indice $Id_m$, et $Id_j$ le taux de variation journalier de l'indice. Ce taux peut par exemple être évalué à partir du taux d'inflation moyen de l'indice sur trois mois de la manière suivante :

$$Id_j = \frac{Id_m - Id_{m-3}}{Nbj} \qquad (4)$$

$Id_{m-3}$ étant l'indice d'inflation déterminé trois mois auparavant, et Nbj le nombre de jours durant une période de trois mois. Ainsi Nbj peut être choisi égal à 90.

La banque centrale BC choisit un taux d'intérêt à appliquer aux valeurs des différents comptes 21 à 25 et 31 à 34, le calculateur du centre de compensation CC réévaluant à chaque unité de temps les positions respectives des comptes 21 à 24 en fonction de ce taux d'intérêt.

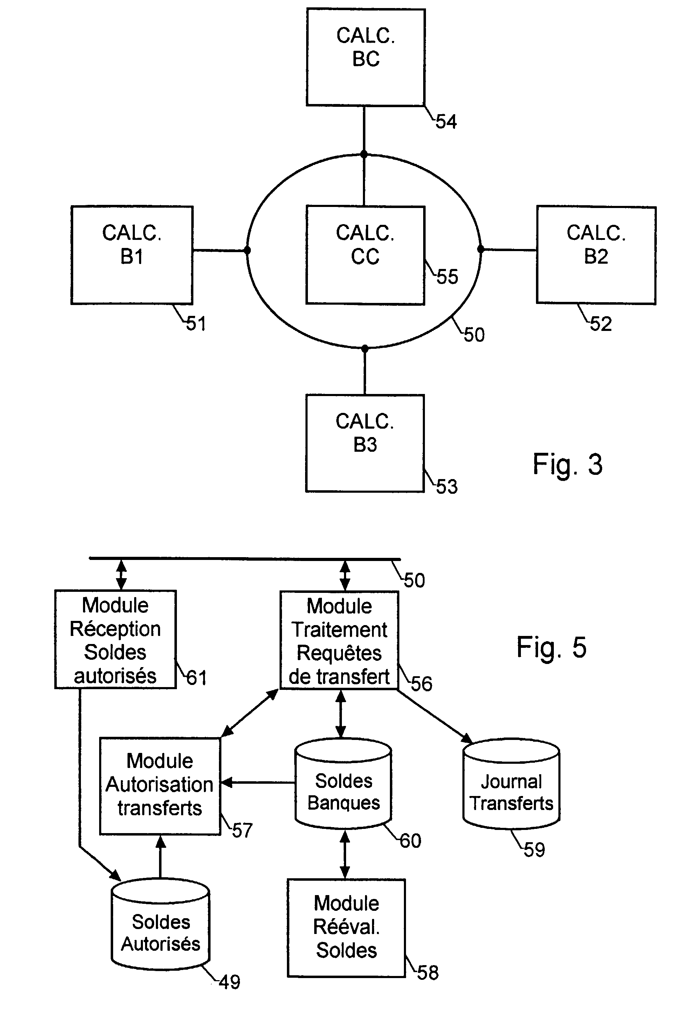

Sur la figure 3, ces mécanismes sont avantageusement mis en oeuvre par des calculateurs 51 à 55 ou systèmes de calculateurs interconnectés par des réseaux internes, équipant respectivement les banques B1 à B3, ainsi que la banque centrale BC et le centre de compensation CC. Ces systèmes sont interconnectés par un réseau de télécommunication sécurisé 50, de manière à pouvoir émettre, recevoir et traiter en temps réel les différents ordres de transfert qu'ils s'échangent, tout en garantissant l'irrévocabilité de ces ordres.

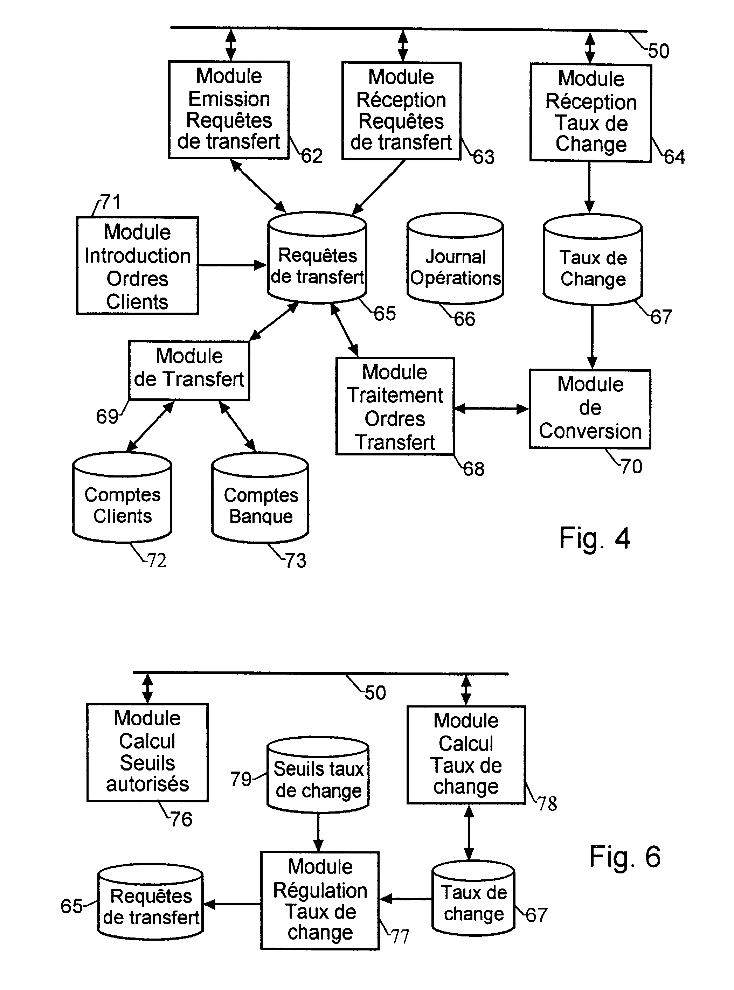

Sur la figure 4, les calculateurs ou systèmes 51 à 54 comprennent chacun un module d'introduction 71 d'ordres de transfert d'une certaine somme vers un compte situé dans une région utilisant une autre monnaie locale, ces ordres émanant des clients de la banque correspondante B1 à B3. L'activation de ce module déclenche par exemple l'affichage sur un écran d'une grille de saisie permettant à l'opérateur d'introduire les informations suivantes :

- le numéro du compte de l'émetteur de l'ordre de transfert,
- le numéro du compte du destinataire de l'ordre,
- le montant du transfert,
- la monnaie du montant du transfert,
- la monnaie dans laquelle le montant du transfert doit être changé, et
- le sens du transfert.

les numéros de compte incluant un numéro d'identification de la banque et le numéro du compte attribué par la banque au client.
Le module 71 vérifie que toutes les informations nécessaires pour effectuer un transfert ont été introduites et sont correctes, met en forme ces informations et les transfère dans un fichier de requêtes de transfert 65.

Ce fichier 65 contient avantageusement pour chaque requête à traiter, les informations introduites par l'opérateur, ainsi qu'un champ destiné à recevoir la valeur du montant à transférer en monnaie de référence, et un champ recevant un code indiquant l'état de la requête, et en particulier, les traitements déjà effectués sur cette requête, et si la requête est acceptée ou refusée.

L'introduction d'une requête dans le fichier 65 active un module 68 de traitement des ordres de transfert qui lit le montant à transférer, et envoie ce montant à un module de conversion 70 pour obtenir la valeur équivalente en monnaie de référence. A cet effet, le module 70 a accès à un fichier 67 contenant les valeurs des taux de change, lui permettant d'appliquer la formule (1) ou la formule (2), suivant que la monnaie locale est ou non celle utilisée comme monnaie de base de la monnaie de référence. Le fichier 67 est mis à jour en temps réel par un module 64 de réception des taux de change qui sont par exemple transmis périodiquement par le calculateur 54.

Une fois qu'il a obtenu la valeur en monnaie de référence du montant à transférer, le module 68 introduit cette valeur dans l'enregistrement de la requête stocké dans le fichier 65.
Les enregistrements de requête stockés dans le fichier 65 ainsi complétés sont ensuite traités par un module 62 d'émission de requêtes qui envoie les informations concernant la requête stockées dans ce fichier par le réseau 50 à destination du calculateur 55 du centre de compensation CC. Le calculateur 55 détermine alors si le transfert demandé est autorisé ou non et renvoie au calculateur émetteur 51 à 54 l'enregistrement de la requête complété par un code d'autorisation.

Chaque calculateur ou système 51 à 54 comprend également un module de réception 63 qui reçoit des enregistrements de requêtes de transfert des autres calculateurs 51 à 55. Lorsqu'il s'agit d'une requête renvoyée par le calculateur 55 du centre de compensation CC, le module 63 complète dans le fichier 65 l'enregistrement de la requête reçue, en y introduisant le code d'autorisation renvoyé par le centre de compensation CC. Dans les autres cas, il s'agit de requêtes émises par d'autres banques et l'enregistrement reçu est alors ajouté au fichier 65.

Si une requête de transfert est refusée par le calculateur 55 du centre de compensation CC, le calculateur 51 à 54 avertit l'opérateur de la banque qui doit alors prendre les mesures nécessaires auprès de la banque centrale BC pour que ce transfert soit autorisé. Une fois ces mesures prises, l'opérateur peut mettre à jour l'enregistrement de la requête refusée pour retirer le code d'autorisation et ainsi déclencher son émission par le module 62 vers le calculateur 55, afin de renouveler la demande d'autorisation de transfert auprès du centre de compensation CC.

Lorsqu'une requête autorisée est enregistrée dans le fichier 65, un module de transfert 69 est activé. Ce module a accès à un fichier de comptes clients 72 et à un fichier de comptes 73 de la banque pour effectuer le transfert proprement dit, indiqué dans l'enregistrement de la requête autorisée. Ce transfert est effectué en débitant le compte client du montant dans la monnaie locale, et en créditant ce montant au compte de la banque dans la même monnaie. Ce module met à jour l'enregistrement de requête correspondant dans le fichier 65 pour indiquer que le transfert a été effectué.

Lorsqu'un tel transfert a été effectué, le module 62 transmet l'enregistrement de la requête au calculateur de la banque du destinataire du transfert pour indiquer à celle-ci que le destinataire a reçu un certain montant en monnaie de référence.

Lorsque le module 63 reçoit un enregistrement de requête de transfert effectué en faveur d'un client de la banque, il l'inscrit dans le fichier 65, ce qui déclenche à nouveau le module 69 qui débite un compte de banque en monnaie de référence dans le fichier 73 du montant indiqué dans l'enregistrement de la requête, et crédite ce montant en monnaie de référence au compte du client destinataire du transfert.

Le module 71 peut également recevoir des ordres de change émanant des clients de banque, pour changer un certain montant exprimé dans la monnaie de référence, dans la monnaie locale, ou réciproquement. Dans ce cas, le module 71 élabore un enregistrement de requête de transfert, dans lequel les numéros de compte de l'émetteur et du destinataire sont identiques, cet enregistrement étant inséré dans le fichier 65 des requêtes de transfert. Cet enregistrement sera ensuite traité par le modules 68, puis directement par le module 69, car il n'est alors pas nécessaire de demander l'autorisation au calculateur 55 du centre de compensation CC.

Toutes les opérations effectuées dans le fichier 65 sont mémorisées au fur et à mesure par les modules 62, 63, 68, 69 et 71 dans un journal 66.

Sur la figure 5, le calculateur 55 du centre de compensation CC comprend un module 56 de traitement des enregistrements de requêtes de transfert émis par les calculateurs 51 à 54, qui transmet les enregistrements reçus à un module 57 d'autorisation des transferts. Un fichier 60 géré par le calculateur 55 mémorise les soldes des transferts en monnaie de référence, effectués entre les banques B1 à B4. Le module 57 a accès au fichier 60 des soldes et à un fichier 49 de seuils de soldes autorisés en valeur positive et négative, pour vérifier si le montant à transférer n'entraîne pas un dépassement de ces valeurs de seuil pour la banque émettrice du transfert, aussi bien que pour la banque destinatrice. Le module 57 renvoie au module 56 l'enregistrement de la requête complété par le code d'autorisation qui l'envoie vers le calculateur 51 à 54 de la banque émettrice de la requête. Si le transfert est autorisé, le module de traitement 56 met à jour le fichier 60 des soldes, en débitant le compte de la banque émettrice du montant du transfert en monnaie de référence et en créditant ce montant dans la même monnaie au solde de la banque destinataire du transfert.

Le calculateur 55 comprend par ailleurs un fichier 59 de journal de transfert dans lequel sont mémorisées les opérations de transfert effectuées dans le fichier des soldes 60 par le calculateur 55.

Il comprend également un module 61 de réception des valeurs de seuil, qui met à jour le fichier 49 sur demande des banques B1 à B3 et BC, ainsi qu'un module de réévaluation des soldes 58 qui met périodiquement à jour les soldes des banques enregistrés dans le fichier 60 en leur appliquant un taux d'intérêt prédéfini, par exemple fourni par le calculateur 54 de la banque centrale BC.

Sur la figure 6, le calculateur 54 comprend, en plus des éléments montrés sur la figure 4, un module de calcul 76 de seuils qui détermine les seuils à appliquer par le module d'autorisation des transferts 57 du calculateur 55, un module 77 de régulation automatique des taux de change, et un module 78 d'évaluation des taux de change qui remplace le module 64 montré sur la figure 4.

Le module 78 met à jour périodiquement les valeurs des taux de change mémorisés dans le fichier 67 et transmet à chaque mise à jour ces valeurs par le réseau 50 aux calculateurs 51 à 53. Le module 78 peut également être conçu pour extrapoler en continu les indices statistiques (indice d'inflation) pour mettre à jour en permanence les taux de conversion des monnaies locales en monnaie de référence et inversement.

Le module 77 lit périodiquement les taux de change mémorisés dans le fichier 67 et les compare à des seuils haut et bas respectifs mémorisés dans un fichier 79. S'il détecte qu'une monnaie locale perd trop de valeur relativement aux autres monnaies locales, il émet des requêtes de transfert à toutes les banques B1 à B3 possédant des devises dans cette monnaie, en introduisant ces requêtes dans le fichier 65 des requêtes de transfert, ces requêtes ayant pour objet le transfert d'un montant prédéterminé en monnaie de référence à convertir dans la monnaie dont la valeur relative est en baisse. Ces requêtes sont ensuite traitées comme précédemment décrit, par les modules 62, 68 et 69, sans qu'il soit nécessaire d'obtenir une autorisation du calculateur 55 du centre de compensation CC. Les calculateurs 51 à 53 qui reçoivent ces requêtes disposent alors du montant transféré en monnaie de référence et transfèrent en contrepartie, la valeur correspondante dans la monnaie locale en question, à destination de la banque centrale BC.

Inversement, si le module 77 détecte qu'une monnaie locale prend trop de valeur relativement aux autres monnaies locales, il émet des requêtes de transfert à toutes les banques B1 à B3 possédant des devises en monnaie de référence, pour les échanger contre les montants correspondants dans monnaie en question.

Dans ces deux cas, les retraits et ajouts de devises en monnaie locale et monnaie de référence sont effectués sur les comptes de banque 73.

Bien entendu, toutes ces opérations sont enregistrées dans le fichier journal 66 de chaque calculateur 51 à 54, ce qui permet en cas de problème, notamment de transmission sur le réseau 50, de corriger les erreurs éventuelles.

## Revendications

1. Système de transfert utilisable pour réguler les flux hydrauliques et électriques dans un réseau hydroélectrique et également pour réguler les flux monétaires dans les transactions internationales, ce système permettant de transférer des quantités mesurées dans des unités locales de mesure différentes entre une pluralité d'entités (B1 à B4), chaque entité utilisant une unité locale de mesure propre (UL1, UL2), associée à au moins un paramètre variant en fonction du temps d'une manière aléatoire, caractérisé en ce que chaque entité (B1, B2) est associée à un calculateur périphérique respectif (11, 12) connecté à un calculateur central (CC) par un réseau de transmission, chaque calculateur périphérique comprenant :

- des moyens pour déterminer une première opération de conversion pour convertir l'unité locale de mesure (UL1) utilisée par l'entité associée (B1), en une unité de référence (UR) prédéterminée, et une seconde opération de conversion pour convertir réciproquement l'unité de référence (UR) en l'unité locale de mesure (UL1) utilisée par l'entité associée (B1), l'unité de référence (UR) étant associée à un paramètre constant en valeur réelle, et ces opérations de conversion tenant compte des variations passées du paramètre associé à l'unité locale de mesure,

- un premier moyen de transfert pour transférer vers une autre entité (B2) des quantités (X1) mesurées dans l'unité locale (UL1) utilisée par l'entité (B1), ces moyens appliquant la première opération de conversion à la quantité à transférer pour obtenir la quantité équivalente (Xr) en unités de référence (UR), et transférant cette quantité (Xr) avec l'indication de l'entité destinatrice (B2) de cette quantité, par le réseau de transmission, vers le calculateur central (CC), et

- un second moyen de transfert pour transférer du calculateur central (CC) des quantités (Xr) en unités de référence (UR), ces moyens appliquant la seconde opération de conversion à ces quantités pour obtenir la quantité (X2) équivalente en unités locales (UL2) utilisées par l'entité associée (B2), et transférant par le réseau de transmission vers l'entité associée (B2) la quantité (X2) équivalente en unités locales (UL2),

le calculateur central (CC) comprenant des moyens pour recevoir et stocker les quantités (Xr) en unités de référence (UR) transférées par les calculateurs périphériques (11 à 14) des entités (B1 à B4) et pour transmettre vers les calculateurs périphériques des quantités (Xr) en unités de référence (UR).

2. Système selon la revendication 1, caractérisé en ce que le calculateur central (CC) comprend un mécanisme de contrôle et de surveillance (BC) qui n'autorise les opérations de transfert de quantités (Xr) en unités de référence (UR) que s'ils n'entraînent pas au niveau de chaque entité (B1 à B4) un déficit ou un excédent en unités de référence dépassant des seuils prédéterminés.

3. Système selon la revendication 1 ou 2, caractérisé en ce que les quantités (Xr) en unités de référence (UR) sont utilisables exclusivement pour les échanges entre entités (B1 à B4).

4. Système selon l'une des revendications précédentes, caractérisé en ce que les opérations de conversion utilisent des taux de conversion respectifs des unités locales (UL1, UL2) en unités de référence, qui varient en fonction des quantités en unités locales (X1, X2) mises en circulation respectivement par les différentes entités (B1, B2), chaque calculateur périphérique (11) comprenant en outre :

- des moyens pour déclencher le premier moyen de transfert, avec comme destinataire l'entité (B1) associée, appliqué à une certaine quantité (X1) mesurée dans l'unité locale (UL1) utilisée par l'entité (B1), lorsque le paramètre associé à cette unité locale (UL1) perd anormalement sa valeur par rapport à ceux associés aux autres unités locales (UL), ce qui a pour effet de retirer la quantité (X1) en unités locales (UL1), de lui appliquer la première opération de conversion, et de transférer en contrepartie la quantité équivalente (Xr) en unités de référence (UR) du calculateur central (CC) vers le calculateur périphérique (11), et

- des moyens pour déclencher le second moyen de transfert appliqué à une certaine quantité (Xr) d'unités de référence vers l'entité (B1) associée, lorsque le paramètre associé à l'unité locale (UL1) utilisée par l'entité (B1) prend anormalement de la valeur par rapport à ceux associés aux autres unités locales (UL), ce qui a pour effet d'appliquer la seconde opération de conversion à cette quantité (Xr), et de transférer en contrepartie du calculateur central (CC) vers l'entité (B1) la quantité équivalente en unités locales (UL1).

5. Système selon l'une des revendications précédentes, appliqué à la gestion d'un réseau hydroélectrique, dans lequel les entités (B1 à B5) correspondent à des bassins, et les unités de mesure locales (UL) aux niveaux d'eau dans les bassins, et l'unité de mesure de référence (UR) à la puissance électrique.

6. Système selon l'une des revendications 1 à 4, appliqué aux transactions internationales, dans lequel les entités correspondent aux organismes bancaires, et les unités de mesure locales aux monnaies locales, le paramètre associé à ces unité étant leur valeur réelle en pouvoir d'achat, l'unité de référence correspondant à une monnaie de référence créée pour être utilisée uniquement dans les transactions internationales, et présentant une valeur réelle en pouvoir d'achat constante dans un Etat.

7. Système selon la revendication 6, caractérisé en ce que la seconde opération de conversion utilise un taux de conversion croissant en fonction du temps.

8. Système selon la revendication 6 ou 7, caractérisé en ce que les quantités (Xr) converties en unités de référence (UR) sont échangées entre les calculateurs périphériques (11, 12) indépendamment de leur conversion dans les unités locales (UL1, UL2) respectives des entités.

9. Système selon l'une des revendications 6 à 8, caractérisé en ce qu'une unité locale (UL1) est choisie comme unité locale de base de l'unité de référence (UR), et en ce que les opérations de conversion font intervenir un indice de variation courant de la valeur de l'unité locale (UL1) de base.

10. Système selon la revendication 9, caractérisé en ce que les opérations de conversion avec une unité locale (UL2) qui n'est pas l'unité locale (UL1) de base font intervenir un taux de conversion de l'unité locale (UL2) dans l'unité locale de base (UL1).

Fig. 1

Fig. 2

CALC.
BC

54

CALC.
B1

51

CALC.
CC

55

50

CALC.
B2

52

CALC.
B3

53

Fig. 3

50

Module
Réception
Soldes
autorisés

61

Module
Traitement
Requêtes
de transfert

56

Fig. 5

Module
Autorisation
transferts

57

Soldes
Banques

60

Journal
Transferts

59

Soldes
Autorisés

49

Module
Rééval.
Soldes

58

Fig. 4

Fig. 6

Office européen des brevets

**RAPPORT DE RECHERCHE EUROPEENNE**

Numéro de la demande

EP 97 40 2875

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 542 298 A (CITIBANK NA) 19 mai 1993<br>* page 5, ligne 41 - page 7, ligne 46 *<br>* page 35, ligne 37 - page 37, ligne 34 *<br>--- | 1,6 | G06F17/40<br>//G06F157:00 |
| A | EP 0 435 182 A (TOKYO SHIBAURA ELECTRIC CO) 3 juillet 1991<br>* abrégé; revendications 1-3,6 *<br>----- | 1,5 | |

**DOMAINES TECHNIQUES RECHERCHES (Int.Cl.6)**

G06F

Le présent rapport a été établi pour toutes les revendications

| Lieu de la recherche | Date d'achèvement de la recherche | Examinateur |
|---|---|---|
| LA HAYE | 6 mars 1998 | Fournier, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)